# EUROPEAN PATENT SPECIFICATION

(11) **EP 2 642 214 B1**
(45) Date of publication and mention of the grant of the patent: **13.02.2019**
(21) Application number: 13160093.4
(22) Date of filing: 20.03.2013
(51) Int. Cl.: F24F 13/02, F24F 3/16, F24F 13/20, F24F 1/56, A61L 9/16

(54) **Supporting structure for air handling units.**
Tragkonstruktion für Lüftungsgeräte.
Structure portante pour des unités de traitement d'air.

(30) Priority: 23.03.2012 IT MO20120077
(43) Date of publication of application: 25.09.2013
(73) Proprietor: Librizzi, Giuseppe, 24124 Bergamo (BG) (IT)
(72) Inventor: Librizzi, Giuseppe, 24124 Bergamo (BG) (IT)
(74) Representative: Pandolfi, Paolo

(56) References cited:
- EP-A1- 2 101 120
- EP-A2- 2 101 117
- WO-A1-2007/045285
- WO-A1-2008/003440
- IT-B- 1 242 490

## Description

The invention relates to a supporting structure for supporting panels that are intended to form, once they have been assembled, a containing body of an air handling unit, known, in the industry, as A.H.U., or of an extraction unit or of a plenum box.

Supporting structures are known comprising a plurality of thermal break section bars that are connected together by connecting elements.

Each thermal break section bar comprises a first fixed abutting element and a second fixed abutting element that face one another and are arranged for retaining an end portion of a first panel, and a third fixed abutting element and a fourth fixed abutting element that face one another and are arranged for retaining a further end portion of a second panel.

More precisely, the first abutting element and the second abutting element project from a first face of the thermal break section bar, whilst the third abutting element and the fourth abutting element project from a second face of the thermal break section bar that is adjacent to or opposite the first face, the first abutting element and the third abutting element being connected together to form a 90° angle and being positioned, once the containing body is assembled, inside the latter.

In use, to assemble the containing body, a first end of a first panel is inserted between the first abutting element and the second abutting element, after which this first end is fixed to the first abutting element and to the second abutting element by screws, rivets or the like. Similarly, a further first end of a further first panel is inserted between the third abutting element and the fourth abutting element, after which this further first end is fixed to the third abutting element and to the fourth abutting element by screws, or rivets, or the like.

This operation is repeated to fix all the panels to the thermal break supporting section bars, after which the latter are connected together by the connecting elements.

A drawback of known supporting structures is that they do not possess antimicrobial properties, in other words they are not able to kill pathogenic microorganisms such as, for example *Pseudomonas aeruginosa, Escherichia coli, Candida albicans, Staphylococcus aureus, Legionella pneumophila, Aspergillus niger, Salmonella choleraesuis* and *Listeria monocytogenes.*

This means that such supporting structures have to be subjected to frequent washing with consequent increased maintenance costs.

WO2007/045285A1 discloses profiles and joining systems for panels and/or conduits made of polyurethane foam, in particular, for the conveyance of air for environmental conditioning, treated with a silver ion solution with an antimicrobial function to improve the hygiene possibilities in rooms and conduits where said profiles and joining systems are installed.

An object of the invention is to improve the supporting structures arranged for supporting panels that are intended to form, once they have been assembled, a containing body of an air handling unit, or of an extraction unit or of a plenum box.

A further object is to obtain supporting structures having antimicrobial properties.

The invention provides a supporting structure as defined in independent claim 1.

Owing to said silver ions included in the supporting structure it is possible to eradicate microorganisms, in particular to reduce the presence of pathogenic microorganisms that are usually present in the common air and on the surfaces of the objects.

This is because said silver ions, which are appropriately released from said supporting structure, have a powerful antimicrobial action.

In fact, said silver ions, after being ingested by the microorganism, perform this antimicrobial action by destroying the cell walls of the microorganism, preventing the microorganism from breathing and eliminating the possibility of reproduction of the microorganism by inhibiting RNA (ribonucleic acid).

In this manner, said supporting structure can be used as an antimicrobial agent.

This means that the external surfaces of said supporting structure, by suitably releasing said silver ions, destroy the microorganisms, in particular the pathogenic microorganisms present on the surfaces.

The invention can be better understood and implemented with reference to the attached drawings that illustrate an embodiment thereof by way of non-limiting example, in which:
Figure 1 is a schematic plan view of an air handling unit, including the supporting structure according to the invention;
Figure 2 is a perspective view of a first connecting element included in the supporting structure according to the invention;
Figure 3 is a section of a first supporting section bar, included in the supporting structure according to the invention, in a respective operating configuration;
Figure 4 is an exploded view of the first supporting section bar of Figure 3;
Figure 5 is a perspective view of a second connecting element included in the supporting structure according to the invention;
Figure 6 is a section of a second supporting section bar, included in the supporting structure according to the invention, in a respective operating configuration;
Figure 7 is an exploded view of the second supporting section bar of Figure 6.

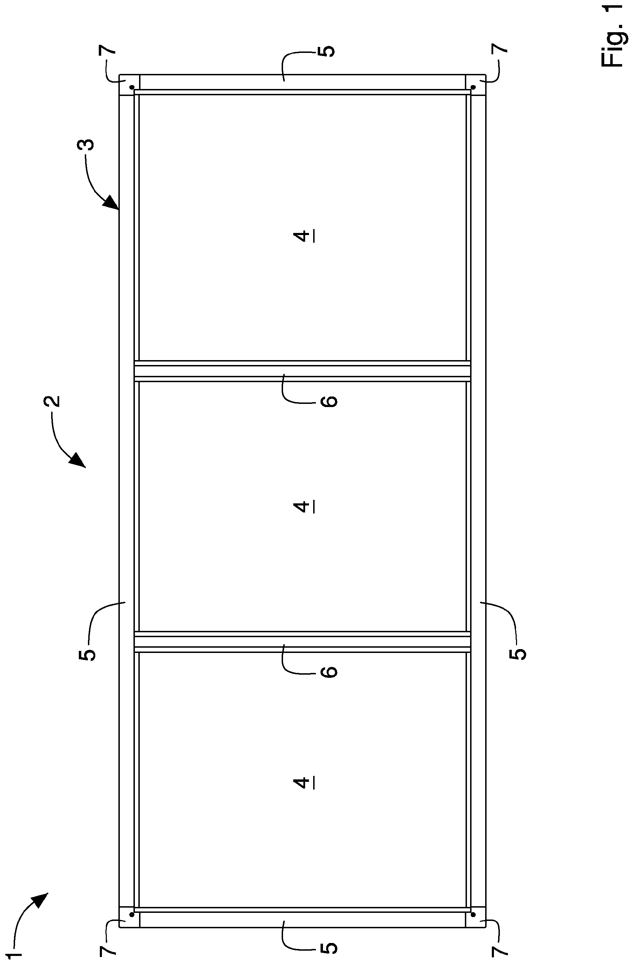

With reference to Figure 1 an air handling unit 1 is shown.

In one embodiment of the invention, which is not shown, instead of the air handling unit an extraction unit is provided.

In another embodiment of the invention, which is not shown, instead of the air handling unit a plenum box is provided.

The unit 1 comprises a containing body 2, of substantially box shape.

Inside the containing body 2 a recuperator, a filter, a heat-exchange battery, a drop separator, a condensate tank and a fan can be housed that are not shown.

The unit 1 comprises a supporting structure 3 arranged for supporting panels 4 that are intended to form the containing body 2.

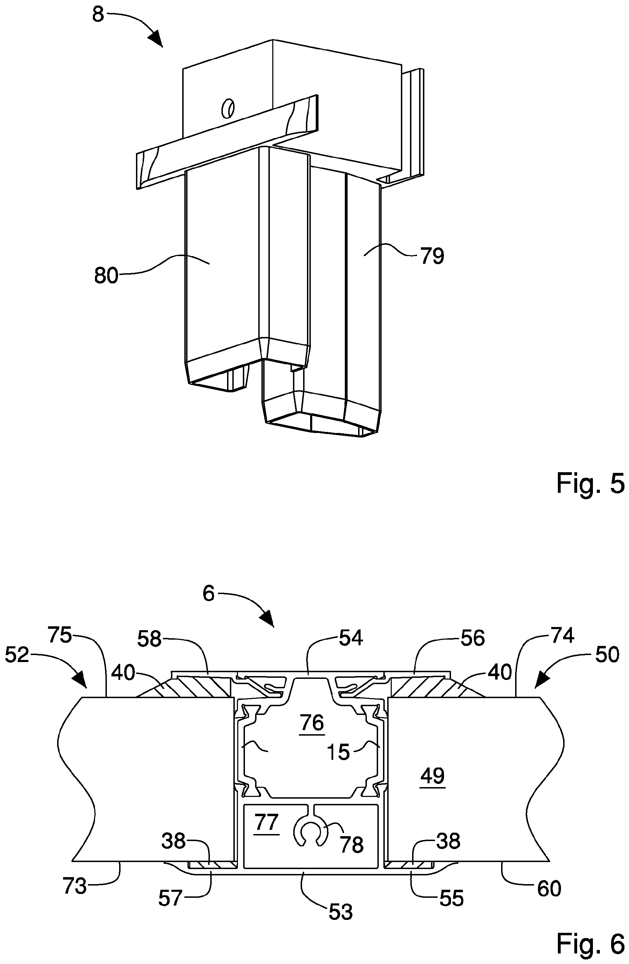

The supporting structure 3 comprises first thermal break supporting section bars 4, second thermal break supporting section bars 6, first connecting elements 7 and, shown in Figure 5, second connecting elements 8.

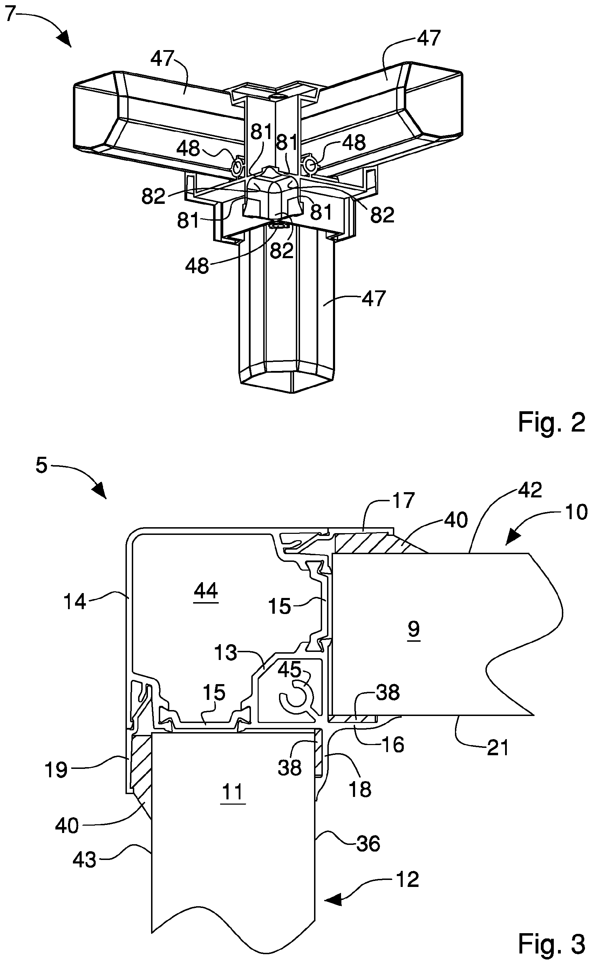

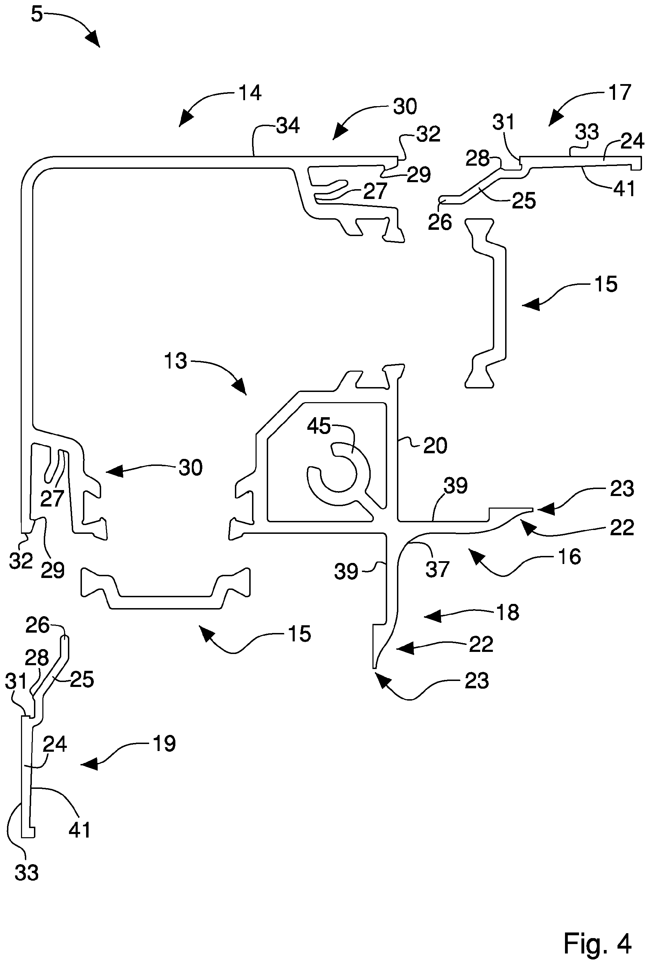

In Figures 3 and 4 a first supporting section bar 5 is shown.

The first supporting section bar 5, which has a square section shape, is arranged for supporting a first end portion 9 of a first panel 10 and a second end portion 11 of a second panel 12, the first panel 10 and the second panel 12 being arranged at 90°.

The first supporting section bar 10 comprises a first part 13 and a second L-shaped part 14.

In particular, the first part 13 and the second part 14 are made of aluminium.

The first part 13 and the second part 14 are connected together by inserts 15, made of a material with low thermal conductivity, for example a polyamide.

In particular, the inserts 15 are intended for making a thermal break.

The first supporting section bar 5 comprises retaining means arranged for retaining through pressure the first end portion 9 and the second end portion 11.

In particular, the retaining means comprises a first abutting element 16, a second abutting element 17, a third abutting element 18 and a fourth abutting element 19.

The first abutting element 16, which is fixed, extends over the entire length of the first supporting section bar 5, projects from a first face 20 of the first part 13, and is arranged for abutting on a first wall 21 of the first end portion 9, the first wall 21 being arranged, in use, inside the containing body 2.

In particular, the first abutting element 16 comprises a first edge zone 22 arranged for abutting on the first wall 21, the first edge zone 22 having a decreasing thickness, in particular curved, towards a free end 23 thereof.

The second abutting element 17 is removably couplable with the second part 14, extends for the entire length of the first supporting section bar 5, and is operationally opposite the first abutting element 16.

In particular, the second abutting element 17 comprises a main body 24 from which a coupling body 25 projects that is tilted with respect to the main body 24.

The coupling body 25 comprises an end 26 arranged for being received in a groove 27 obtained in a further end 30 of the second part 14.

Also, the coupling body 25 comprises a first anchoring element 28 arranged for coupling with, and being retained by, a second anchoring element 29 obtained in the further end 30.

The main body 24 comprises an abutting surface 31 arranged for abutting, when the second abutting element 17 is coupled with the second part 14, on a further abutting surface 32, of the second part 14, obtained in the further end 30.

In use, when the second abutting element 17 is coupled with the second part 14, an external wall 33 of the main body 24 is flush with a further external wall 34 of the second part 14.

The third abutting element 18, which is fixed, extends over the entire length of the first supporting section bar 5, projects from a second face 35, positioned at 90° with respect to the first face 20, of the first part 13, and is arranged for abutting on a further first wall 36 of the second end portion 11, the further first wall 36 being arranged, in use, inside the containing body 2.

The third abutting element 18 is structurally and functionally similar to the first abutting element 16 and for this reason it is not disclosed in detail.

Also, the third abutting element 18 is connected to the first abutting element 16 by a curved connecting surface 37.

The fourth abutting element 19 is structurally and functionally similar to the second abutting element 17 and for this reason it is not disclosed in detail.

The first supporting section bar 5 further comprises first gaskets 38 positioned in respective seats 39 obtained in the first abutting element 16 and in the third abutting element 18, the first gaskets 38 abutting, in use, on the first wall 21 and on the further first wall 36.

In particular, in use, the first gaskets 38 are interposed between the first abutting element 16 and the first wall 21 and between the third abutting element 18 and the further first wall 36.

Also, the first supporting section bar 5 includes second gaskets 40 positioned in respective further seats 41 obtained in the second abutting element 17 and in the fourth abutting element 19, the second gaskets 40 abutting, in use, on a second wall 42, opposite the first wall 21, of the first end portion 9, and on a further second wall 43, opposite the further first wall 36, of the second end portion 11.

In particular, in use, the second gaskets 40 are interposed between the second abutting element 16 and the second wall 42 and between the fourth abutting element 19 and the further second wall 43.

Also, in use, to lock the first end portion 9, the first wall 21 is first made to abut on the first abutting element 16, after which the second abutting element 17 fits into the second part 14, making the second gaskets 40 abut on the second wall 42.

Also, the first supporting section bar 5 comprises a housing 44 that is bounded by the internal surfaces of the first part 13, of the second part 14 and of the inserts 15, the function of which will be explained below.

The first supporting section bar 5 further includes a C-shaped passage 45 received inside the first part 13.

With reference to Figures 1 and 2, a first connecting element 7 is shown that is arranged for connecting three first support section bars 5 together.

The first connecting element 7, for example made of a nylon-based compound PA6, comprises three protrusions 47, arranged in the space like a triad of Cartesian axes and shaped in such a manner as to be each inserted in a shapingly coupled manner in a housing 44 of a first supporting section bar 5.

Also, the first connecting element 7 comprises three further passages 48, each positioned at the respective protrusion 47.

In use, the further passages 48 are each aligned to a passage 45 of a first supporting section bar 5.

In this manner it is possible, by inserting a suitable connecting element, which is not shown, for example a self-locking screw, into each of the passage 45 - further passage 48 pairs, to fix a first supporting section bar 5 to the first connecting element 7 stiffly.

Also, the first connecting element 7 comprises abutting elements 81 that have a shape and function that are similar to those of the first abutting element 16 and of the third abutting element 18.

In particular, the abutting elements 81 are connected together by a further curved connecting surface 82.

In use, each further connecting surface 82 is placed next to a respective connecting surface 37.

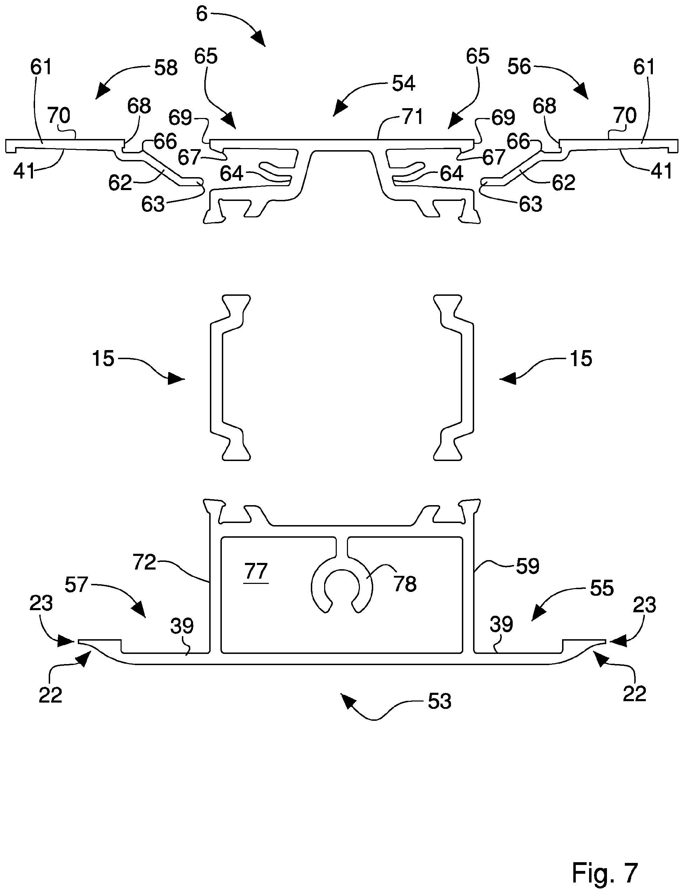

In Figures 6 and 7 a second supporting section bar 6 is shown.

The second supporting section bar 6 has a "Ω" section shape, is arranged for supporting a further first end portion 49 of a further first panel 50 and a further second end portion 51 of a further second panel 52, the further first panel 50 and the further second panel 52 being arranged at 180°.

The second supporting section bar 6 comprises a further first part 53 and a further second part 54.

In particular, the further first part 53 and further second part 54 are made of aluminium. The further first part 53 and the further second part 54 are connected together by the inserts 15.

The second supporting section bar 6 comprises respective retaining means arranged for retaining through pressure the further first end portion 49 and the further second end portion 51.

In particular, the retaining means comprises a further first abutting element 55, a further second abutting element 56, a further third abutting element 57 and a further fourth abutting element 58.

The further first abutting element 55, which is fixed, extends over the entire length of the second supporting section bar 6, projects from a further first face 59 of the further first part 53, and is arranged for abutting on a first wall 60 of the further first end portion 49, the first wall 60 being arranged, in use, inside the containing body 2.

Similarly to the first abutting element 16, the further first abutting element 55 comprises a first edge zone 22 arranged for abutting on the further first wall 60, the first edge zone 22 having a decreasing thickness, in particular curved, towards a free end 23 thereof.

The further second abutting element 56 is removably couplable with the further second part 54, extends over the entire length of the second supporting section bar 6, and is operationally opposite the further first abutting element 55.

In particular, the further second abutting element 56 comprises a further main body 61 from which a further coupling body 62 projects that is tilted with respect to the further main body 61.

The further coupling body 62 comprises an end 63 arranged for being received in a further groove 64 obtained in a further end 65 of the further second part 54.

Also, the further coupling body 62 comprises a further first anchoring element 66 arranged for coupling with, and being retained by, a further second anchoring element 67 obtained in the further end 65.

The further main body 61 comprises an abutting surface 68 arranged for abutting, when the further second abutting element 56 is coupled with the further second part 54, on a further abutting surface 69, of the further second part 54, obtained in the further end 65.

In use, when the further second abutting element 56 is coupled with the further second part 54, an external wall 70 of the further main body 61 is flush with a further external wall 71 of the further second part 54.

The further third abutting element 57, which is fixed, extends over the entire length of the second supporting section bar 6, projects from a further second face 72, opposite the further first face 59, of the further first part 53, and is arranged for abutting on a further first wall 73 of the further second end portion 51, the further first wall 73 being arranged, in use, inside the containing body 2.

The further third abutting element 57 is structurally and functionally similar to the further first abutting element 55 and for this reason it is not disclosed in detail.

The further fourth abutting element 58 is structurally and functionally similar to the further second abutting element 56 and for this reason it is not disclosed in detail.

The second supporting section bar 6 further comprises the first gaskets 38 positioned in respective seats 39 obtained in the further first abutting element 55 and in the further third abutting element 57, the first gaskets 38 abutting, in use, on the first wall 60 and the further first wall 73.

In particular, in use, the first gaskets 38 are interposed between the further first abutting element 55 and the first wall 60 and between the further third abutting element 57 and the further first wall 73.

Also, the second supporting section bar 6 includes the second gaskets 40 positioned in respective further seats 41 obtained in the further second abutting element 56 and in the further fourth abutting element 58, the second gaskets 40 abutting, in use, on a second wall 74, opposite the first wall 60, of the further first end portion 49, and on a further second wall 75, opposite the further first wall 73, of the further second end portion 51.

In particular, in use, the second gaskets 40 are interposed between the further second abutting element 56 and the second wall 74 and between the further fourth abutting element 58 and the further second wall 75.

Also, the second supporting section bar 6 comprises a first housing 76, bounded by the internal surfaces of the further second part 54 and of the inserts 15, and a second housing 77, bounded by the internal surfaces of the further first part 53, the function of which will be explained below.

The second supporting section bar 6 further includes a C-shaped passage78 received inside the second housing 77.

With reference to Figure 5, a second connecting element 8 is shown that is fixable to opposite ends of the second supporting section bar 6, and is arranged for connecting together a second supporting section bar 6 to a pair of first supporting section bars 5, the first supporting section bars 5 being positioned perpendicularly to the second supporting section bar 6.

The second connecting element 8, for example made of a nylon-based compound PA6, comprises a first protrusion 79 and a second protrusion 80, extending parallel to one another, and shaped in such a manner as to each be inserted in a shapingly coupled manner respectively into the first housing 76 and into the second housing 77.

Also, the second connecting element 8 comprises a hole, which is not shown, positioned at the second protrusion 80.

In use, the hole is aligned to the passage 78 of a second supporting section bar 6.

In this manner it is possible, by inserting a suitable connecting element, which is not shown, in particular a self-locking screw, into the hole - passage 78 pair, to fix stiffly an end of a second supporting section bar 6 to the second connecting element 8.

The supporting structure 3 disclosed above is characterised by the fact that it comprises silver ions.

In particular, the supporting structure 3 comprises at least 0.008% silver ions by weight.

In one embodiment of the invention, the supporting structure 3 comprises between 0.008% and 0.1% silver ions by weight.

The silver ions are included in, and released from, a vector, in particular a vector in powder form.

This vector can be a ceramic vector, in particular zeolite, and comprise about 2.5% silver ions by weight, or can be a vitreous vector, in particular glass, and comprise about 1.6% silver ions by weight, or can be a ceramic vector and a vitreous vector.

The antimicrobial treatment to which the first supporting section bars 5, the second supporting section bars 6 and the inserts 15 are subjected, comprises a first step in which these elements are placed in a kiln where they are degreased and dried.

Afterwards, the antimicrobial treatment comprises a second step in which these elements are placed in a chamber where suitable guns deposit on the external surfaces of the elements the powder containing the silver ions included in the vector. The powder adheres to the external surfaces of these elements by an electrostatic effect.

Subsequently, this antimicrobial treatment provide for placing in another kiln, at a temperature comprised between 220 and 250 °C, these elements that are coated with silver ions included in the vector in such a manner as to fix the silver ions included in the vector on the external surfaces of these elements.

On the other hand, the first connecting elements 7 and the second connecting elements 8 are made antimicrobial by including in the nylon-based compound PA6, silver ions included in the vector.

In this manner the silver ions will be distributed in a substantially homogenous manner inside the compound.

It should be noted that, owing to the silver ions included in the supporting structure 3 it is possible to eradicate microorganisms, in particular to reduce the presence of pathogenic microorganisms that are usually present in the common air and on the surfaces of the objects.

This is because the silver ions, which are appropriately released from the supporting structure 3, have a powerful antimicrobial action.

In fact, the silver ions, after being ingested by the microorganism, perform this antimicrobial action by destroying the cell walls of the microorganism, preventing the microorganism from breathing and eliminating the possibility of reproduction of the microorganism by inhibiting RNA (ribonucleic acid).

In this manner, the supporting structure 3 can be used as an antimicrobial agent.

This implies that the external surfaces of the supporting structure 3, by suitably releasing the silver ions, destroy the microorganisms, in particular the pathogenic microorganisms present on the surfaces.

Also, it should be noted that the connecting surfaces 37 and the further connecting surfaces 82, which are curved, on the one hand oppose the depositing of bacteria, microorganisms, moulds, larvae and the like and on the other hand promote and ensure the cleaning and sanification of the supporting structure 3.

Also, it should be noted that the absence of fixing screws, rivets and the like, for fixing the panels 4 to the supporting section bars 5, 6, and the decreasing profile of the thickness of the first edge zone 22, further reduce the possibility of depositing of bacteria, microorganisms, moulds, larvae and the like and promote and ensure the cleaning and sanification of the supporting structure 3.

## Claims

1. Supporting structure for supporting panels (4) intended to form a containing body (2) of an air handling unit (1), or of an extraction unit or of a plenum box, said supporting structure (3) comprising silver ions and supporting section bars (5, 6) cooperating together to support said panels (4), said supporting section bars (5, 6) being coated externally with said silver ions, wherein each of said supporting section bars (5, 6) comprises a first part (13, 53) and a second part (14, 54) that are connected together, said first part (13, 53) and said second part (14, 54) being made of aluminium, ***characterised in that*** each of said supporting section bars (5, 6) comprises at least one insert (15) made of a material with low thermal conductivity arranged for connecting said first part (13, 53) to said second part (14, 54), said insert (15) being coated externally with said silver ions.

2. Structure according to claim 1, wherein said supporting structure (3) comprises at least 0.008% in weight of said silver ions, in particular between 0.008% and 0.1% in weight of said silver ions.

3. Structure according to claim 1, or 2, wherein said silver ions are included in and released by a vector, in particular a vector in the form of powder.

4. Structure according to claim 3, wherein said vector is a ceramic vector, in particular zeolite, and comprises about 2.5% in weight of said silver ions, or wherein said vector is a vitreous vector, in particular glass, and comprises about 1.6% in weight of said silver ions, or wherein said vector comprises a ceramic vector and a vitreous vector.

5. Structure according to claim 1, wherein each of said supporting section bars (5, 6) comprises retaining means for retaining through pressure an end portion (9, 11, 49, 51) of one of said panels (4), said retaining means comprising a first abutting element (16, 55), which is fixed, projecting from a first face (20, 59) of said first part (13, 53) and a second abutting element (17, 56), removably couplable with said second part (14, 54), opposite said first abutting element (16, 55).

6. Structure according to claim 5, wherein said retaining means comprises a third abutting element (18), which is fixed, projecting from a second face (35) of said first part (13) and arranged for abutting on a further first wall (36) of a further end portion (11) of a further panel (12) of said panels (4), said third abutting element (18) being connected to said first abutting element (16) by a curved connecting surface (37).

7. Structure according to claim 5, or 6, wherein said first abutting element (16, 55) and said third abutting element (18, 57) comprise a respective edge zone (22) arranged for abutting on said first wall (21, 60) and said further first wall (36, 73), said edge zone (22) having a thickness which decreases towards a free end thereof (23).

8. Structure according to any preceding claim, and comprising at least one connecting element (7, 8) to connect together at least one pair of said supporting section bars (5, 6), said silver ions being distributed in a substantially homogenous manner in said at least one connecting element (7, 8).

9. Structure according to claim 8, wherein said at least one connecting element (7, 8) comprises at least one passage (48) operationally aligned with a respective other passage (45, 78) of one of said supporting section bars (5, 6), said passage (48) and said other passage (45, 78) being connectable by connecting means, in particular a self-locking screw, such as to stiffly fix said connecting element (7, 8) to at least one of said supporting section bars (5, 6).

## Patentansprüche

1. Stützstruktur zur Aufnahme von Tafeln (4), die zum Formen eines haltenden Körpers (2) für eine Luftbehandlungseinheit (1) vorgesehen sind, oder für eine Extraktionseinheit einer Plenum-Box, wobei die Stützstruktur (3) Silberionen und Stützabschnittstreben (5, 6) aufweist, die miteinander zusammenwirken, um die Tafeln (4) zu unterstützen, wobei die Stützabschnittstreben (5, 6) außen mit Silberionen beschichtet sind, wobei jede der Stützabschnittstreben (5, 6) einen ersten Teil (13, 53) und einen zweiten Teil (14, 54) aufweist, die miteinander verbunden sind, wobei der erste Teil (13, 53) und der zweite Teil (14, 54) aus Aluminium bestehen, **dadurch gekennzeichnet, dass** jede der Stützabschnittstreben (5, 6) wenigstens einen Einsatz (15) aufweist, der aus einem Material mit einer niedrigen thermischen Leitfähigkeit besteht und dazu angeordnet ist, den ersten Teil (13, 53) mit dem zweiten Teil (14, 54) zu verbinden, wobei der Einsatz (15) außen mit den Silberionen beschichtet ist.

2. Struktur nach Anspruch 1, bei der die Stützstruktur (3) wenigstens 0,008 Gew.-% Silberionen aufweist, insbesondere zwischen 0,008 Gew.-% und 0,1 Gew.-% Silberionen aufweist.

3. Struktur nach Anspruch 1 oder 2, bei der die Silberionen in einen Vektor eingeschlossen sind und von einem Vektor freigegeben werden, insbesondere einem Vektor in der Form von Pulver.

4. Struktur nach Anspruch 3, bei der der Vektor ein keramischer Vektor ist, insbesondere ein Zeolith ist, und ungefähr 2,5 Gew.-% Silberionen aufweist, oder wobei der Vektor ein glasiger Vektor ist, insbesondere Glas, und ungefähr 1,6 Gew.-% Silberionen aufweist, oder wobei der Vektor einen keramischen Vektor und einen glasigen Vektor aufweist.

5. Struktur nach Anspruch 1, bei der jede der Stützabschnittstreben (5, 6) ein Rückhaltemittel zum Zurückhalten von Durchgangsdruck auf einen Endbereich (9, 11, 49, 51) von einer der Tafeln (4) aufweist, wobei das Rückhaltemittel ein erstes Anlageelement (16, 55) aufweist, das fest ist und das von einer ersten Fläche (20, 59) des ersten Teils (13, 53) hervorsteht, sowie ein zweites Anlageelement (17, 56) aufweist, das gegenüber dem ersten Anlageelement (16, 55) lösbar mit dem zweiten Teil (14, 54) koppelbar ist.

6. Struktur nach Anspruch 5, bei der das Rückhaltemittel ein drittes Anlageelement (18) aufweist, das fest ist und von einer zweiten Fläche (35) des ersten Teils (13) hervorsteht und dazu angeordnet ist, an einer weiteren ersten Wand (36) eines weiteren Endbereiches (11) einer weiteren Tafel (12) der Tafeln (4) anzuliegen, wobei das dritte Anlageelement (18) mit dem ersten Anlageelement (16) durch eine gekrümmte Verbindungsfläche (37) verbunden ist.

7. Struktur nach Anspruch 5 oder 6, bei der das erste Anlageelement (16, 55) und das dritte Anlageelement (18, 57) eine entsprechend Randzone (22) aufweisen, die zur Anlage an der ersten Wand (21, 60) und an der weiteren ersten Wand (36, 73) ausgebildet ist, wobei die Randzone (22) eine Dicke hat, die zu einem freien Ende (23) hin davon abnimmt.

8. Struktur nach irgendeinem vorhergehenden Anspruch, die ferner wenigstens ein Verbindungselement (7, 8) aufweist, um wenigstens ein Paar der Stützabschnittstreben (5, 6) miteinander zu verbinden, wobei die Silberionen in einer im Wesentlichen homogenen Weise an dem wenigstens einen Verbindungselement (7, 8) verteilt sind.

9. Struktur nach Anspruch 8, bei der das wenigstens eine Verbindungselement (7, 8) wenigstens einen Durchlass (48) aufweist, der arbeitsmäßig mit einem betreffenden anderen Durchlass (45, 78) von einer der Stützabschnittstreben (5, 6) ausgerichtet ist, wobei der Durchlass (48) und der andere Durchlass (45, 78) durch Verbindungsmittel miteinander verbindbar sind, insbesondere mittels einer selbstsichernden Schraube, um so das Verbindungselement (7, 8) mit wenigstens einer der Stützabschnittstreben (5, 6) steif zu verbinden.

## Revendications

1. Structure de support pour supporter des panneaux (4) destinés à former un corps conteneur (2) d'une unité de traitement d'air (1), ou d'une unité d'extraction ou d'un boîtier de plénum, ladite structure de support (3) comprenant des ions d'argent et des barres profilées de support (5, 6) coopérant ensemble pour supporter lesdits panneaux (4), lesdites barres profilées de support (5, 6) étant revêtues extérieurement desdits ions d'argent, dans laquelle chacune desdites barres profilées de support (5, 6) comprend une première partie (13, 53) et une seconde partie (14, 54) qui sont reliées ensemble, ladite première partie (13, 53) et ladite seconde partie (14, 54) étant faites d'aluminium, **caractérisée en ce que** chacune desdites barres profilées de support (5, 6) comprend au moins un insert (15) fait d'un matériau ayant une faible conductivité thermique agencé pour relier ladite première partie (13, 53) à ladite seconde partie (14, 54), ledit insert (15) étant revêtu extérieurement desdits ions d'argent.

2. Structure selon la revendication 1, dans laquelle ladite structure de support (3) comprend au moins 0,008 % en poids desdits ions d'argent, en particulier entre 0,008 % et 0,1 % en poids desdits ions d'argent.

3. Structure selon la revendication 1 ou 2, dans laquelle lesdits ions d'argent sont inclus dans et libérés par un vecteur, en particulier un vecteur sous la forme de poudre.

4. Structure selon la revendication 3, dans laquelle ledit vecteur est un vecteur céramique, en particulier une zéolite, et comprend environ 2,5 % en poids desdits ions d'argent, ou dans laquelle ledit vecteur est un vecteur vitreux, en particulier du verre, et comprend environ 1,6 % en poids desdits ions d'argent, ou dans laquelle ledit vecteur comprend un vecteur céramique et un vecteur vitreux.

5. Structure selon la revendication 1, dans laquelle chacune desdites barres profilées de support (5, 6) comprend des moyens de retenue pour retenir par pression une portion d'extrémité (9, 11, 49, 51) de l'un desdits panneaux (4), lesdits moyens de retenue comprenant un premier élément de butée (16, 55), qui est fixe, faisant saillie d'une première face (20, 59) de ladite première partie (13, 53) et un deuxième élément de butée (17, 56), pouvant être couplé de manière amovible à ladite seconde partie (14, 54), à l'opposé dudit premier élément de butée (16, 55).

6. Structure selon la revendication 5, dans laquelle lesdits moyens de retenue comprennent un troisième élément de butée (18), qui est fixe, faisant saillie d'une seconde face (35) de ladite première partie (13) et agencé pour venir en butée contre une première paroi supplémentaire (36) d'une portion d'extrémité supplémentaire (11) d'un panneau supplémentaire (12) desdits panneaux (4), ledit troisième élément de butée (18) étant relié audit premier élément de butée (16) par une surface de liaison courbe (37).

7. Structure selon la revendication 5 ou 6, dans laquelle ledit premier élément de butée (16, 55) et ledit troisième élément de butée (18, 57) comprennent une zone de bord (22) respective agencée pour venir en butée contre ladite première paroi (21, 60) et ladite première paroi supplémentaire (36, 73), ladite zone de bord (22) ayant une épaisseur qui diminue vers une extrémité libre (23) de celle-ci.

8. Structure selon l'une quelconque des revendications précédentes, et comprenant au moins un élément de liaison (7, 8) pour relier ensemble au moins une paire desdites barres profilées de support (5, 6), lesdits ions d'argent étant répartis d'une manière sensiblement homogène dans au moins un élément de liaison (7, 8).

9. Structure selon la revendication 8, dans laquelle ledit au moins un élément de liaison (7, 8) comprend au moins un passage (48) aligné de manière opérationnelle avec un autre passage (45, 78) respectif de l'une desdites barres profilées de support (5, 6), ledit passage (48) et ledit autre passage (45, 78) pouvant être reliés par des moyens de liaison, en particulier une vis autobloquante, de manière à fixer rigidement ledit élément de liaison (7, 8) à au moins une desdites barres profilées de support (5, 6).
